# EUROPEAN PATENT APPLICATION

(11) **EP 2 447 745 A1**
(43) Date of publication of application: **02.05.2012**
(21) Application number: 11186620.8
(22) Date of filing: 26.10.2011
(51) Int. Cl.: G02B 5/28

(54) **Multilayer filter**

(30) Priority: 27.10.2010 JP 2010241130
(71) Applicant: Olympus Corporation, Shibuya-ku Tokyo 151-0072 (JP)
(72) Inventor: Koyama, Masanori, Tokyo 151-0072 (JP)
(74) Representative: Kuhnen & Wacker

(57) **Abstract**

A multilayer filter includes a dielectric multilayer film in which, layers of at least two types (Ta₂O₅, SiO₂), each layer having a different refractive index, are stacked alternately, and a substrate on which, at least two stacks are stacked. The group delay dispersion of the stack decreases gradually as far from the substrate. The multilayer filter has an adjustment layer at any one or a more positions from positions, between the two stacks which are stacked, between the substrate and the stack, and on the stack which is farthest from the substrate.

## Description

### BACKGROUND OF THE INVENTION

### Field of the Invention

The present invention relates to a multilayer filter.

### Description of the Related Art

A short-pulse laser oscillator which emits a laser having a pulse width of a femtosecond (fs) order, has been used in medical treatment, measurement, processing, and a performance-observation equipment. This short-pulse laser oscillator emits laser rays by an operation called as mode locking. Generally, laser light is generated by resonance of light of a single wavelength. However, in the mode locking, laser light is oscillated by synchronizing all phases of lights of different wavelengths, or in other words by making relative phase difference zero. Therefore, the mode locking is a phenomenon in which, due to multimode interference between longitudinal modes, time of locking is short, and a pulse is extremely short in a time domain.

The laser light of a short pulse width which is generated in such manner is considered as a collection of laser lights of a single wavelength, each having a wavelength component, and a traveling speed differs for each wavelength in an optical component and air. Therefore, a phenomenon of widening of pulse width as the light travels occurs.

The pulse width of the light having the pulse width widened can be contracted by making reflect by a mirror which is designed such that light with a wavelength of high traveling speed travels a long distance. Such a mirror is called as a negative-dispersion mirror, and is described in Japanese Patent No. 4142179. Japanese Patent No. 4142179 has disclosed that it is possible to contract the pulse width by making the light reflect for several times between two negative-dispersion mirrors.

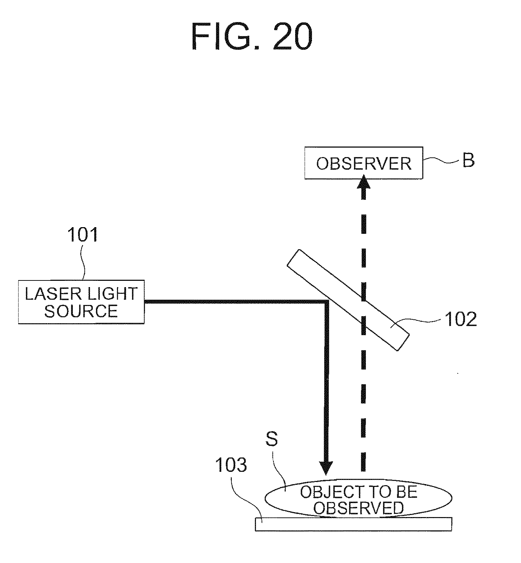

Fig. 20 is a diagram showing a schematic structure of a conventional multiphoton absorption microscope.

In an apparatus for carrying out observation in a wavelength band which differs from an excitation wavelength, such as a multiphoton absorption microscope for performance observation, excitation light is generated by irradiating multiphoton excitation light from a short-pulse laser oscillator on an object to be observed, the excitation light which has been generated is to be observed. In such apparatus, short-pulse laser light which has been oscillated by a laser light source 101 is made to be reflected at a multilayer filter 102, and is irradiated on an object S to be observed which has been placed on an observation platform 103, as shown in Fig. 20. Excitation light which has been generated by the object S to be observed, by irradiation of the laser light passes through the multilayer filter 102, and can be observed by an observer B. As a characteristic of the multilayer filter 102, it has been sought that the excitation light generated at the object S to be observed is made to pass for observation in a visible region, without the pulse width being widened in a reflection region including a wavelength of the short-pulse laser light.

However, in the negative-dispersion mirror described in Japanese Patent No. 4142179, it is not possible to divide clearly between a band through which the light passes and a band in which the light is reflected, according to the wavelength.

### SUMMARY OF THE INVENTION

The present invention has been made in view of the abovementioned circumstances, and an object of the present invention is to provide a multilayer filter which is capable of dividing light without the pulse width being widened, and moreover, which is capable of widening a reflection band of visible light.

To solve the abovementioned issues and to achieve the object, the multilayer filter according to the present invention includes
a stack which is dielectric multilayer film in which, layers of at least two types, each layer having a different refractive index, are stacked alternately, and
a substrate on which, at least two stacks are stacked, and
a group delay dispersion of the stack decreases gradually as far from the substrate.

In the multilayer filter according to the present invention, it is preferable that the multilayer filter has an adjustment layer at any one or more positions from positions, between the two stacks which are stacked, between the substrate and the stack, and on the stack which is farthest from the substrate.

In the multilayer filter according to the present invention, it is preferable that central wavelengths of the plurality of stacks which are stacked on the substrate differ mutually.

In the multilayer filter according to the present invention, it is preferable that at least one of the plurality of stacks is made of a plurality of blocks, each block having the same number of layers, and an optical film thickness of the plurality of blocks increases gradually as far from the substrate.

In the multilayer filter according to the present invention, it is preferable that a change in the optical film thickness of the plurality of blocks in the stack is in a range of ±2.6% from a regression line.

In the multilayer filter according to the present invention, it is preferable that a transmittance is not more than 5%, and a group delay dispersion is in a range of ±8000 fs².

### BRIEF DESCRIPTION OF THE DRAWINGS

Fig. 1 is a diagram showing a change in a transmittance with respect to a wavelength in a multilayer filter according to a first embodiment of the present invention;
Fig. 2 is a diagram showing a change in a group delay dispersion with respect to the wavelength in the multilayer filter according to the first embodiment;
Fig. 3 is a diagram showing a one-block film thickness with respect to the number of blocks stacked in a second stack of the first embodiment;
Fig. 4 is a diagram showing a change in the transmittance with respect to a wavelength in a first stack of the first embodiment;
Fig. 5 is a diagram showing a change in the transmittance with respect to a wavelength in the second stack of the first embodiment;
Fig. 6 is a diagram showing a change in the group delay dispersion with respect to the wavelength in the first stack of the first embodiment;
Fig. 7 is a diagram showing a change in the group delay dispersion with respect to the wavelength in the second stack of the first embodiment;
Fig. 8 is a diagram showing a change in a transmittance with respect to a wavelength in a multilayer filter according to a second embodiment of the present invention;
Fig. 9 is a diagram showing a change in a group delay dispersion with respect to the wavelength in the multilayer filter according to the second embodiment;
Fig. 10 is a diagram showing a one-block film thickness with respect to the number of blocks stacked in a second stack and a third stack of the second embodiment;
Fig. 11 is a diagram showing a change in the group delay dispersion with respect to a wavelength in a first stack of the second embodiment;
Fig. 12 is a diagram showing a change in the group delay dispersion with respect to a wavelength in the second stack of the second embodiment;
Fig. 13 is a diagram showing a change in the group delay dispersion with respect to a wavelength in the third stack of the second embodiment;
Fig. 14 is a diagram showing a change in a transmittance with respect to a wavelength in a multilayer filter according to a third embodiment of the present invention;
Fig. 15 is a diagram showing a change in a group delay dispersion with respect to the wavelength in the multilayer filter according to the third embodiment;
Fig. 16 is a diagram showing a one-block thickness with respect to the number blocks stacked in a second stack of the third embodiment;
Fig. 17 is a diagram showing a change in a group delay dispersion with respect to a wavelength of a first stack of he third embodiment;
Fig. 18 is a diagram showing a change in a group delay dispersion with respect to a wavelength of a second stack of the third embodiment;
Fig. 19 is a diagram showing a change in a group delay dispersion with respect to a wavelength of a third stack of the third embodiment; and
Fig. 20 is a diagram showing a schematic structure of a conventional multiphoton absorption microscope.
Fig. 21A and Fig. 21B are diagrams showing a layer structure of the multilayer filter according to the first embodiment of the present invention.
Fig. 22A, Fig. 22B, Fig. 22C, Fig. 22D, and Fig. 22E are diagrams showing a layer structure of the multilayer filter according to the second embodiment of the present invention.
Fig. 23A, Fig. 23B, Fig. 23C, and Fig. 23D are diagrams showing a layer structure of the multilayer filter according to the third embodiment of the present invention.

### DETAILED DESCRIPTION OF THE INVENTION

Exemplary embodiments of a multilayer filter according to the present invention will be described below in detail by referring to the accompanying diagrams. However, the present invention is not restricted to the embodiments described below.

Firstly, an action and an effect of the multilayer filter according to the present invention will be described below.

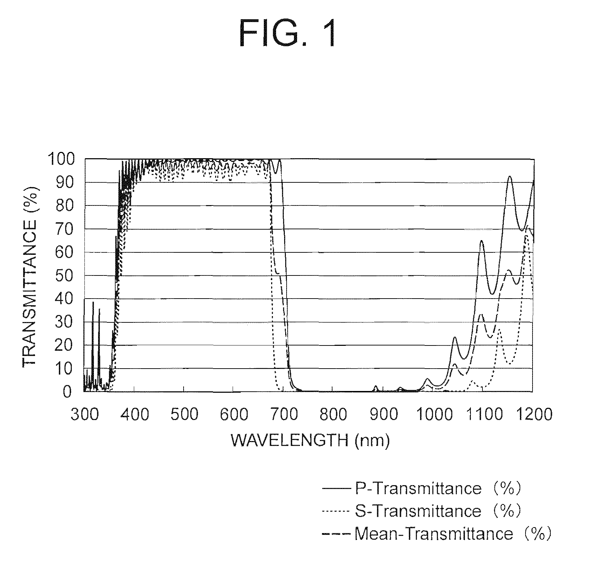

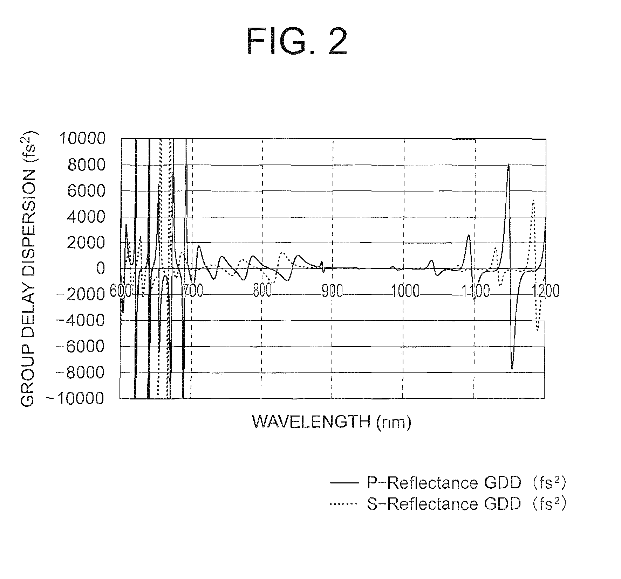

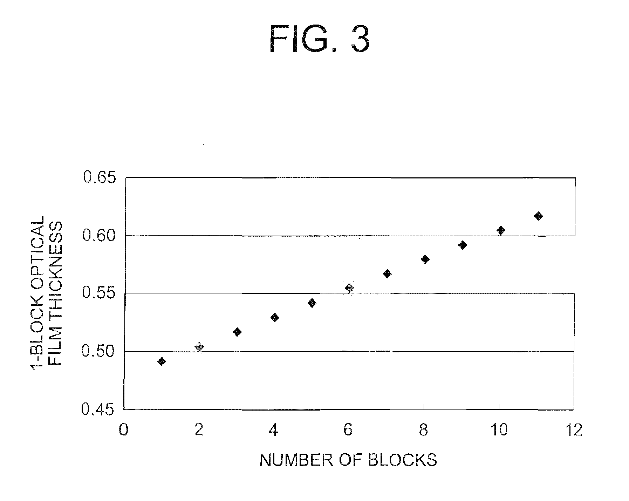

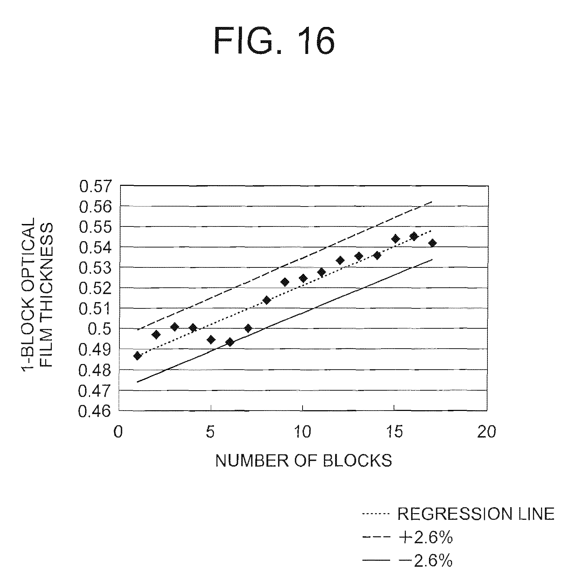

In the multilayer filter according to the present invention, the abovementioned issues are solved by letting a film structure as follows.
(1) A multilayer filter includes a stack which is a dielectric multilayer film in which, layers of at least two types are stacked alternately, each layer having a different refractive index, and a substrate on which, at least two stacks are stacked, and each stack is disposed such that a group delay dispersion (GDD) of the stack decreases gradually as far from the substrate.
   By making such an arrangement, since light cannot reach up to a portion in which, a change in the group delay dispersion becomes large, it is possible to eliminate a substantial change in a value of the group delay dispersion. In the following embodiments namely, a first embodiment, a second embodiment, and a third embodiment, an arrangement is made such that a stack having a thin-film structure for which, the value of the group delay dispersion can come close to zero is placed on an air-side.
(2) It is preferable that the multilayer filter has an adjustment layer at any one or a plurality of positions from positions, between the two stacks which are stacked, between the substrate and the stack, and on the stack which is farthest from the substrate.
   Due to such an arrangement, it is possible to eliminate the rapid change in optical characteristics of a reflection band. For instance, as in the first embodiment, the second embodiment, and the third embodiment which will be described later, by inserting two to four layered adjustment layer between the stacks, as shown in Fig. 1, Fig. 8, and Fig. 14, a transmittance of not less than a certain value is maintained, and the reflection band has transmittance of not more than a certain value. In Fig. 1 of the first embodiment, 90% or more of light having a wavelength in a range of 400 nm to 670 nm, and the transmittance of not more than 5% in a wavelength range of 715 nm to 1000 nm is realized. Similar is true for the second embodiment and the third embodiment.
(3) It is preferable that central wavelengths of the plurality of stacks which are stacked on the substrate differ mutually.
   By making such an arrangement, it is possible to widen a wavelength width of a reflection band. When the central wavelength of the stack is single, it is possible to provide a width of the reflection band only up to 200 nm. However, by overlapping stacks in which the central wavelength is shifted to a long wavelength or a short wavelength, it is possible to provide the reflection band of 200 nm and more. Each reflection band shown in Fig. 1, Fig. 8, and Fig. 14 is wider than 200 nm.
(4) It is preferable that at least one of the plurality of stacks is made of a plurality of blocks, each block having the same number of layers, and an optical film thickness (nd) of the plurality of blocks increases gradually as far from the substrate.
   According to such an arrangement, it is possible to bring the value of the group delay dispersion close to zero. As shown in Fig. 3, Fig. 10, and Fig. 16, optical film thickness for each block increases from a substrate-side toward the air-side.
(5) It is preferable that a change in the optical film thickness of the plurality of blocks in the stack is in a range of ±2.6% from a regression line.
   According to such an arrangement, it is possible to divide clearly a reflection band and a transmission band of optical characteristics, and to bring the group delay dispersion close to zero. As shown in Fig. 16 of the third embodiment, there is an increase and a decrease in a rate of change of optical film thickness when compared with a previous block from the substrate-side up to the air-side. However, the rate of change is in a range of ±2.6% from a regression line.
   It is preferable that the 'stack' in (5) is one of the plurality of stacks. It is preferable that 'the plurality of blocks' is all the blocks.
(6) It is preferable that the transmittance is not more than 5%, and the group delay dispersion is in a range of ±8000 fs². It is preferable that the range of the transmittance and the range of the group delay dispersion are ranges in the reflection band.
   According to such an arrangement, it is possible to divide light without a pulse width of laser being widened. As shown in Fig. 2, Fig. 9, and Fig. 15, the group delay dispersion in the reflection band is accommodated in ±8000 fs².

### (First embodiment)

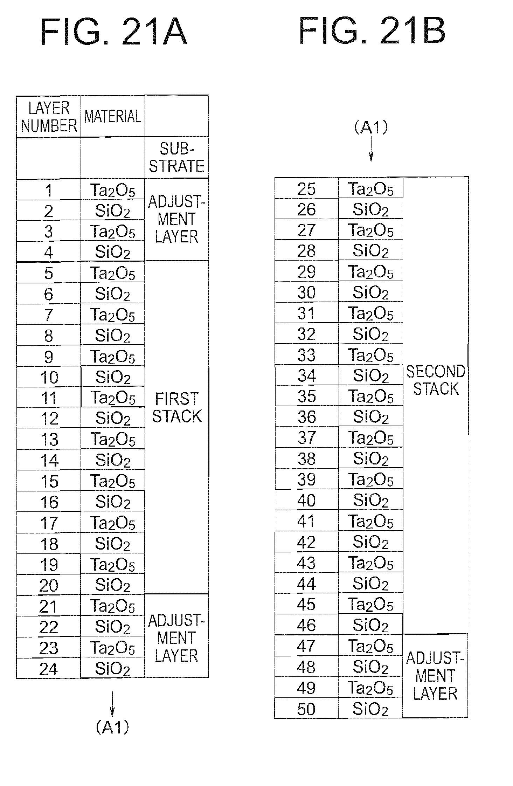

Numerical data for a multilayer filter according to the first embodiment is shown below. Fig. 21A and Fig. 21B are diagrams showing a layer structure of the multilayer filter according to the first embodiment of the present invention.

As shown in the numerical data, in the multilayer filter according to the first embodiment, thin films of a high refractive index material H (Ta₂O₅: refractive index 2.15) and a low refractive index material L (SiO₂: refractive index 1.48) are formed alternately on an optical glass substrate having a refractive index 1.52. More concretely, the multilayer filter is a multilayer filter made of 50 layers of thin films, in which, layers 1 to 4, layers 21 to 24, and layers 47 to 50 from the substrate-side are let to be adjustment layers, layers 5 to 20 from the substrate-side are let to be a first stack, and layers 25 to 46 from the substrate-side are let to be a second stack. Consequently, the adjustment layers are formed between the substrate and the first stack, the first stack and the second stack, and on the second stack farthest from the substrate-side. Moreover, with two layers as one block, the second stack is formed as a plurality of blocks, and an optical film thickness for each block becomes thicker gradually from the substrate-side toward the air-side.

### First embodiment

| Layer number Substrate | Material | Film thickness (nm) |
|---|---|---|
| 1 | Ta₂O₅ | 0.2707 |
| 2 | SiO₂ | 0.2745 |
| 3 | Ta₂O₅ | 0.2295 |
| 4 | SiO₂ | 0.2579 |
| 5 | Ta₂O₅ | 0.2225 |
| 6 | SiO₂ | 0.2528 |
| 7 | Ta₂O₅ | 0.2225 |
| 8 | SiO₂ | 0.2528 |
| 9 | Ta₂O₅ | 0.2225 |
| 10 | SiO₂ | 0.2528 |
| 11 | Ta₂O₅ | 0.2225 |
| 12 | SiO₂ | 0.2528 |
| 13 | Ta₂O₅ | 0.2225 |
| 14 | SiO₂ | 0.2528 |
| 15 | Ta₂O₅ | 0.2225 |
| 16 | SiO₂ | 0.2528 |
| 17 | Ta₂O₅ | 0.2225 |
| 18 | SiO₂ | 0.2528 |
| 19 | Ta₂O₅ | 0.2225 |
| 20 | SiO₂ | 0.2528 |
| 21 | Ta₂O₅ | 0.2238 |
| 22 | SiO₂ | 0.2585 |
| 23 | Ta₂O₅ | 0.2237 |
| 24 | SiO₂ | 0.2636 |
| 25 | Ta₂O₅ | 0.2300 |
| 26 | SiO₂ | 0.2613 |
| 27 | Ta₂O₅ | 0.2359 |
| 28 | SiO₂ | 0.2680 |
| 29 | Ta₂O₅ | 0.2418 |
| 30 | SiO₂ | 0.2747 |
| 31 | Ta₂O₅ | 0.2477 |
| 32 | SiO₂ | 0.2814 |
| 33 | Ta₂O₅ | 0.2536 |
| 34 | SiO₂ | 0.2881 |
| 35 | Ta₂O₅ | 0.2595 |
| 36 | SiO₂ | 0.2948 |
| 37 | Ta₂O₅ | 0.2653 |
| 38 | SiO₂ | 0.3015 |
| 39 | Ta₂O₅ | 0.2712 |
| 40 | SiO₂ | 0.3082 |
| 41 | Ta₂O₅ | 0.2772 |
| 42 | SiO₂ | 0.3149 |
| 43 | Ta₂O₅ | 0.2830 |
| 44 | SiO₂ | 0.3215 |
| 45 | Ta₂O₅ | 0.2889 |
| 46 | SiO₂ | 0.3283 |
| 47 | Ta₂O₅ | 0.2700 |
| 48 | SiO₂ | 0.2973 |
| 49 | Ta₂O₅ | 0.2818 |
| 50 | SiO₂ | 0.1549 |

| | | |
|---|---|---|
| Layer number | | |
| 1 to 4 | adjustment layer | |
| 5 to 20 | first stack | |
| 21 to 24 | adjustment layer | |
| 25 to 46 | second stack | |
| 47 to 50 | adjustment layer | |

Formation of thin films was carried out by a method of IAD (Ion Assisted Deposition) of forming thin films while assisting with an ion gun. According to this method, it is possible to form oxygen ions highly densely by irradiating oxygen ions toward the substrate.

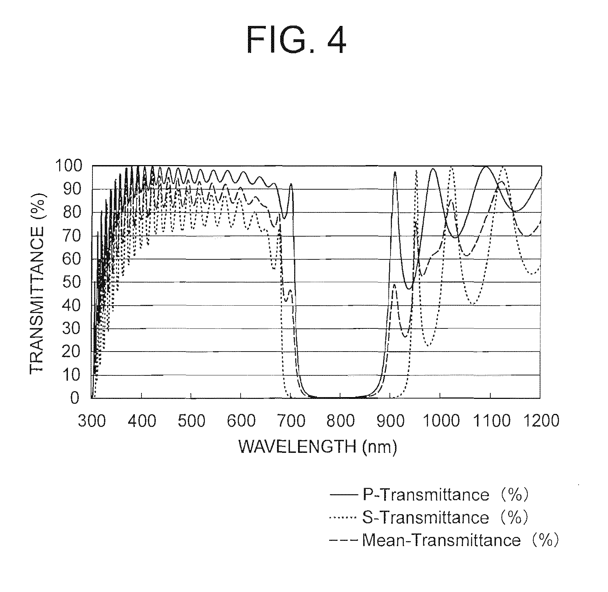

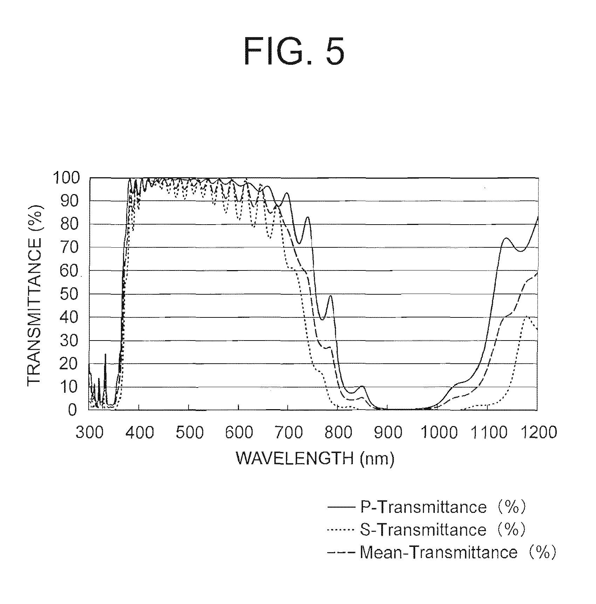

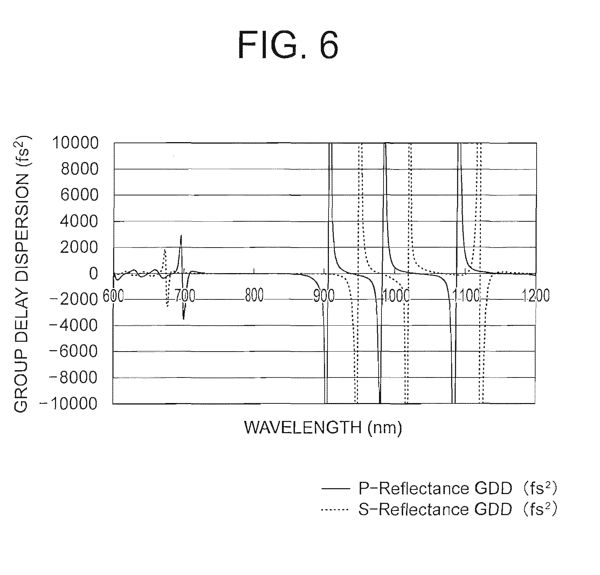

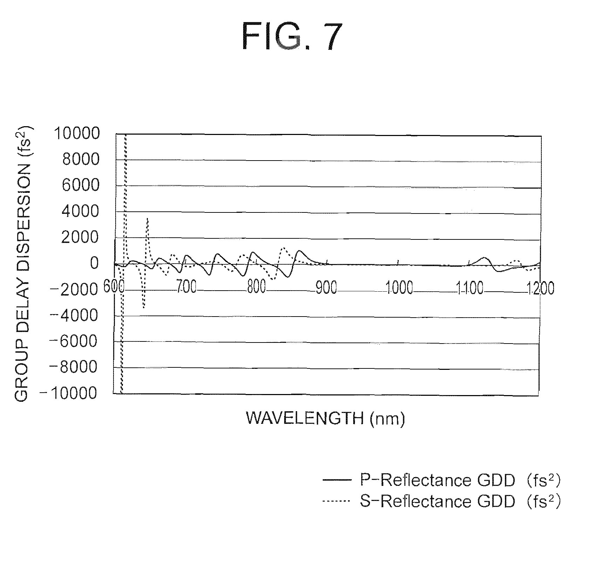

Fig. 1 is a diagram showing a change in a transmittance (%) with respect to a wavelength (unit nm) in the multilayer filter according to the first embodiment. Fig. 2 is a diagram showing a change in the group delay dispersion (fs²) with respect to the wavelength (unit nm) in the multilayer filter according to the first embodiment. Fig. 3 is a diagram showing a one-block film thickness with respect to the number of blocks stacked in a second stack of the first embodiment; Fig. 4 is a diagram showing a change in the transmittance (%) with respect to a wavelength (unit nm) in a first stack of the first embodiment. Fig. 5 is a diagram showing a change in the transmittance (%) with respect to a wavelength (unit nm) in the second stack of the first embodiment. Fig. 6 is a diagram showing a change in the group delay dispersion (fs²) with respect to the wavelength (unit nm) in the first stack of the first embodiment. Fig. 7 is a diagram showing a change in the group delay dispersion (fs²) with respect to the wavelength (unit nm) in the second stack of the first embodiment.

In Fig. 1, Fig. 4, Fig. 5, Fig. 8, and Fig. 14, P-Transmittance (%) is a P-polarization transmittance, S-Transmittance (%) is an S-polarization transmittance, and Mean-Transmittance (%) is an average of the P-Transmittance and the S-Transmittance.

In Fig. 2, Fig. 6, Fig. 7, Fig. 9, Fig. 11 to Fig. 13, Fig. 15, and Fig. 17 to Fig. 19, P-reflectance GDD (fs²) is a P-polarization reflectance group delay dispersion and S-Reflectance GDD (fs²) is an S-polarization reflectance group delay dispersion.

The optical film thickness is a value of 'refractive index x physical film thickness', and film thickness of each layer is described by 'optical film thickness / design wavelength'. Moreover, the design wavelength was let to be 900 nm.

As shown in Fig. 1, for light which is incident at 45° on the multilayer filter formed on the optical glass substrate, as a spectral characteristic, light in a wavelength range of 400 nm to 670 nm passes through, and light in a wavelength range of 715 nm to 1000 nm is reflected. Moreover, regarding the group delay dispersion, as shown in Fig. 2, in a range of 715 nm to 1000 nm which is a reflection band, the group delay dispersion is in a range of 0 ±2000 fs².

Regarding the film structure, as shown in Fig. 3, an optical film thickness for each block when two layers are let to be one block, increases gradually with an increase in the number of blocks from the substrate-side to the air-side. For the number of blocks shown in Fig. 3, side of zero indicates the substrate-side, and indicates that as the number increases, it comes closer to the air-side. Here, the 'air-side' is a side away from the substrate-side, and the layer number is a large layer side.

Furthermore, as it is evident from Fig. 4 and Fig. 5, a central wavelength differs mutually in the first stack and the second stack. In an example shown in Fig. 4 and Fig. 5, the central wavelength of the first stack is 780 nm, and the central wavelength of the second stack is 940 nm.

Moreover, as it is evident from Fig. 6 and Fig. 7, the group delay dispersion for the second stack (Fig. 7) is smaller than the group delay dispersion for the first stack (Fig. 6) which is near the substrate.

In the first embodiment, the method of forming the thin film while assisting by the ion gun has been used. However, the formation of the thin film is not restricted to this method, and other methods such as a vacuum vapor deposition, a sputtering method, and an ion-beam sputtering can be used.

### (Second embodiment)

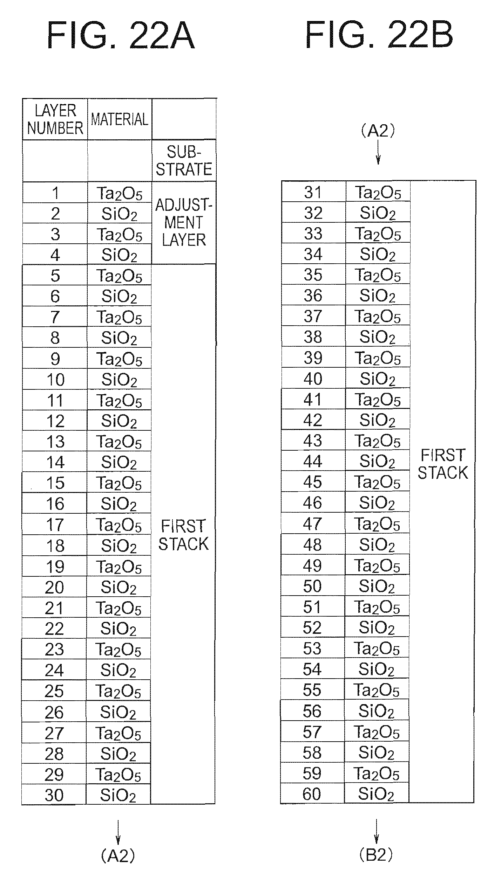

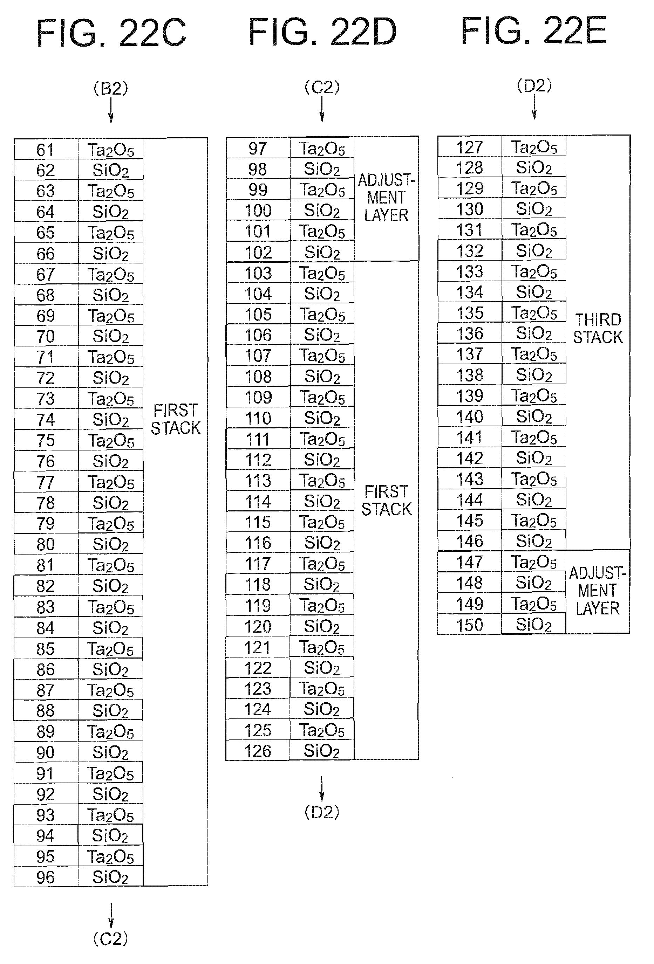

Numerical data for a multilayer filter according to the second embodiment is shown below. Fig. 22A, Fig. 22B, Fig. 22C,

Fig. 22D, and Fig. 22E are diagrams showing a layer structure of the multilayer filter according to the second embodiment of the present invention.

As shown in the numerical data, in the multilayer filter according to the second embodiment, thin films of a high refractive index material H (Ta₂O₅: refractive index 2.15) and a low refractive index material L (SiO₂: refractive index 1.48) are formed alternately on an optical glass substrate having a refractive index 1.52. More concretely, the multilayer filter is a multilayer filter made of 150 layers of thin films, in which, layers 1 to 4, layers 97 to 102, layer 147 to 150 from the substrate-side are let to be adjustment layers, layers 5 to 96 from the substrate-side are let to be a first stack, layers 103 to 126 are let to be a second stack, and layers 127 to 146 are let to a third stack. Consequently, the adjustment layers are formed between the substrate and the first stack, between the first stack and the second stack, and on the third stack which is farthest from the substrate-side. Moreover, with two layers as one block, the second stack and the third stack are formed as a plurality of blocks, and an optical film thickness for each block increases gradually from the substrate-side toward the air-side.

### Second embodiment

| Layer number Substrate | Material | Film thickness (nm) |
|---|---|---|
| 1 | Ta₂O₅ | 0.0596 |
| 2 | SiO₂ | 0.0653 |
| 3 | Ta₂O₅ | 0.0677 |
| 4 | SiO₂ | 0.3523 |
| 5 | Ta₂O₅ | 0.0386 |
| 6 | SiO₂ | 0.0694 |
| 7 | Ta₂O₅ | 0.0386 |
| 8 | SiO₂ | 0.3085 |
| 9 | Ta₂O₅ | 0.0386 |
| 10 | SiO₂ | 0.0694 |
| 11 | Ta₂O₅ | 0.0386 |
| 12 | SiO₂ | 0.3085 |
| 13 | Ta₂O₅ | 0.0386 |
| 14 | SiO₂ | 0.0694 |
| 15 | Ta₂O₅ | 0.0386 |
| 16 | SiO₂ | 0.3085 |
| 17 | Ta₂O₅ | 0.0386 |
| 18 | SiO₂ | 0.0694 |
| 19 | Ta₂O₅ | 0.0386 |
| 20 | SiO₂ | 0.3085 |
| 21 | Ta₂O₅ | 0.0386 |
| 22 | SiO₂ | 0.0694 |
| 23 | Ta₂O₅ | 0.0386 |
| 24 | SiO₂ | 0.3085 |
| 25 | Ta₂O₅ | 0.0386 |
| 26 | SiO₂ | 0.0694 |
| 27 | Ta₂O₅ | 0.0386 |
| 28 | SiO₂ | 0.3085 |
| 29 | Ta₂O₅ | 0.0386 |
| 30 | SiO₂ | 0.0694 |
| 31 | Ta₂O₅ | 0.0386 |
| 32 | SiO₂ | 0.3085 |
| 33 | Ta₂O₅ | 0.0386 |
| 34 | SiO₂ | 0.0694 |
| 35 | Ta₂O₅ | 0.0386 |
| 36 | SiO₂ | 0.3085 |
| 37 | Ta₂O₅ | 0.0386 |
| 38 | SiO₂ | 0.0694 |
| 39 | Ta₂O₅ | 0.0386 |
| 40 | SiO₂ | 0.3085 |
| 41 | Ta₂O₅ | 0.0386 |
| 42 | SiO₂ | 0.0694 |
| 43 | Ta₂O₅ | 0.0386 |
| 44 | SiO₂ | 0.3085 |
| 45 | Ta₂O₅ | 0.0386 |
| 46 | SiO₂ | 0.0694 |
| 47 | Ta₂O₅ | 0.0386 |
| 48 | SiO₂ | 0.3085 |
| 49 | Ta₂O₅ | 0.0386 |
| 50 | SiO₂ | 0.0694 |
| 51 | Ta₂O₅ | 0.0386 |
| 52 | SiO₂ | 0.3085 |
| 53 | Ta₂O₅ | 0.0386 |
| 54 | SiO₂ | 0.0694 |
| 55 | Ta₂O₅ | 0.0386 |
| 56 | SiO₂ | 0.3085 |
| 57 | Ta₂O₅ | 0.0386 |
| 58 | SiO₂ | 0.0694 |
| 59 | Ta₂O₅ | 0.0386 |
| 60 | SiO₂ | 0.3085 |
| 61 | Ta₂O₅ | 0.0386 |
| 62 | SiO₂ | 0.0694 |
| 63 | Ta₂O₅ | 0.0386 |
| 64 | SiO₂ | 0.3085 |
| 65 | Ta₂O₅ | 0.0386 |
| 66 | SiO₂ | 0.0694 |
| 67 | Ta₂O₅ | 0.0386 |
| 68 | SiO₂ | 0.3085 |
| 69 | Ta₂O₅ | 0.0386 |
| 70 | SiO₂ | 0.0694 |
| 71 | Ta₂O₅ | 0.0386 |
| 72 | SiO₂ | 0.3085 |
| 73 | Ta₂O₅ | 0.0386 |
| 74 | SiO₂ | 0.0694 |
| 75 | Ta₂O₅ | 0.0386 |
| 76 | SiO₂ | 0.3085 |
| 77 | Ta₂O₅ | 0.0386 |
| 78 | SiO₂ | 0.0694 |
| 79 | Ta₂O₅ | 0.0386 |
| 80 | SiO₂ | 0.3085 |
| 81 | Ta₂O₅ | 0.0386 |
| 82 | SiO₂ | 0.0694 |
| 83 | Ta₂O₅ | 0.0386 |
| 84 | SiO₂ | 0.3085 |
| 85 | Ta₂O₅ | 0.0386 |
| 86 | SiO₂ | 0.0694 |
| 87 | Ta₂O₅ | 0.0386 |
| 88 | SiO₂ | 0.3085 |
| 89 | Ta₂O₅ | 0.0386 |
| 90 | SiO₂ | 0.0694 |
| 91 | Ta₂O₅ | 0.0386 |
| 92 | SiO₂ | 0.3085 |
| 93 | Ta₂O₅ | 0.0386 |
| 94 | SiO₂ | 0.0694 |
| 95 | Ta₂O₅ | 0.0386 |
| 96 | SiO₂ | 0.3085 |
| 97 | Ta₂O₅ | 0.0386 |
| 98 | SiO₂ | 0.0574 |
| 99 | Ta₂O₅ | 0.0414 |
| 100 | SiO₂ | 0.2922 |
| 101 | Ta₂O₅ | 0.2401 |
| 102 | SiO₂ | 0.2629 |
| 103 | Ta₂O₅ | 0.2320 |
| 104 | SiO₂ | 0.2637 |
| 105 | Ta₂O₅ | 0.2328 |
| 106 | SiO₂ | 0.2646 |
| 107 | Ta₂O₅ | 0.2335 |
| 108 | SiO₂ | 0.2653 |
| 109 | Ta₂O₅ | 0.2342 |
| 110 | SiO₂ | 0.2661 |
| 111 | Ta₂O₅ | 0.2349 |
| 112 | SiO₂ | 0.2669 |
| 113 | Ta₂O₅ | 0.2356 |
| 114 | SiO₂ | 0.2677 |
| 115 | Ta₂O₅ | 0.2364 |
| 116 | SiO₂ | 0.2686 |
| 117 | Ta₂O₅ | 0.2371 |
| 118 | SiO₂ | 0.2694 |
| 119 | Ta₂O₅ | 0.2378 |
| 120 | SiO₂ | 0.2702 |
| 121 | Ta₂O₅ | 0.2385 |
| 122 | SiO₂ | 0.2710 |
| 123 | Ta₂O₅ | 0.2392 |
| 124 | SiO₂ | 0.2719 |
| 125 | Ta₂O₅ | 0.2400 |
| 126 | SiO₂ | 0.2727 |
| 127 | Ta₂O₅ | 0.2638 |
| 128 | SiO₂ | 0.2997 |
| 129 | Ta₂O₅ | 0.2660 |
| 130 | SiO₂ | 0.3022 |
| 131 | Ta₂O₅ | 0.2682 |
| 132 | SiO₂ | 0.3047 |
| 133 | Ta₂O₅ | 0.2703 |
| 134 | SiO₂ | 0.3072 |
| 135 | Ta₂O₅ | 0.2725 |
| 136 | SiO₂ | 0.3096 |
| 137 | Ta₂O₅ | 0.2746 |
| 138 | SiO₂ | 0.3121 |
| 139 | Ta₂O₅ | 0.2768 |
| 140 | SiO₂ | 0.3146 |
| 141 | Ta₂O₅ | 0.2790 |
| 142 | SiO₂ | 0.3170 |
| 143 | Ta₂O₅ | 0.2812 |
| 144 | SiO₂ | 0.3195 |
| 145 | Ta₂O₅ | 0.2834 |
| 146 | SiO₂ | 0.3220 |
| 147 | Ta₂O₅ | 0.2775 |
| 148 | SiO₂ | 0.2996 |
| 149 | Ta₂O₅ | 0.2548 |
| 150 | SiO₂ | 0.1640 |

| | | |
|---|---|---|
| Layer number | | |
| 1 to 4 | adjustment layer | |
| 5 to 96 | first stack | |
| 97 to 102 | adjustment layer | |
| 103 to 126 | second stack | |
| 127 to 146 | third stack | |
| 147 to 150 | adjustment layer | |

Formation of thin films, similarly as in the first embodiment, was carried out by a method of forming thin films while assisting with an ion gun.

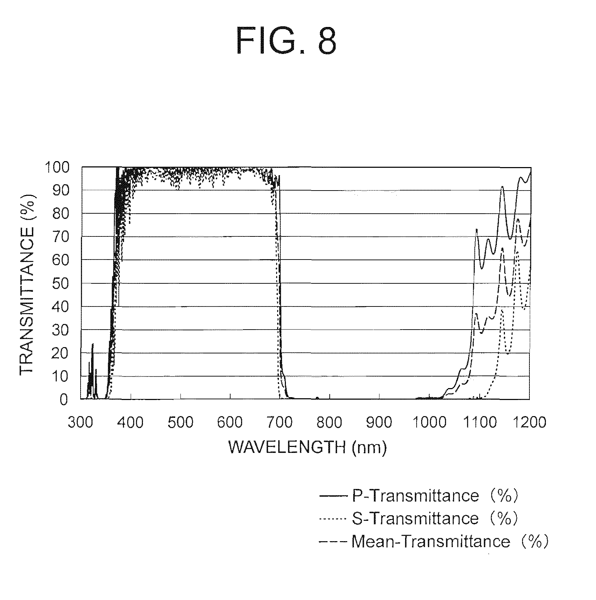

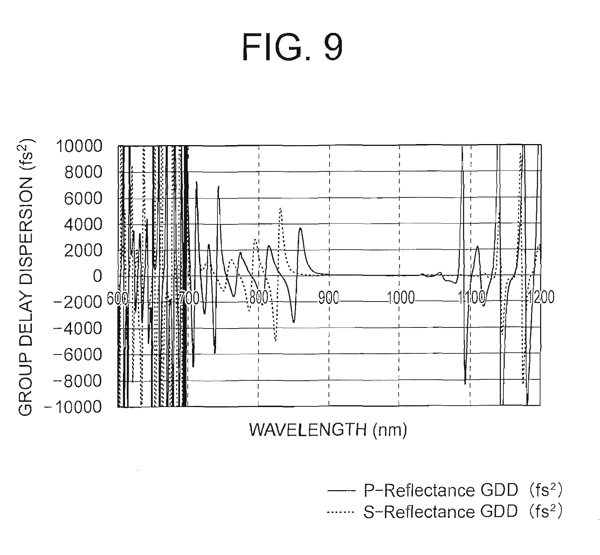

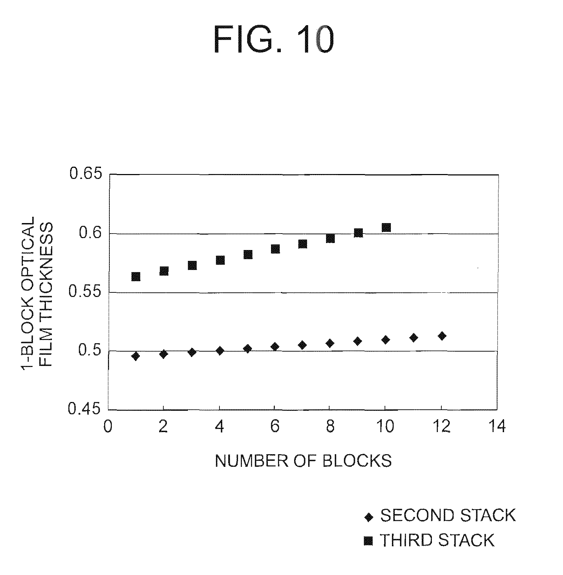

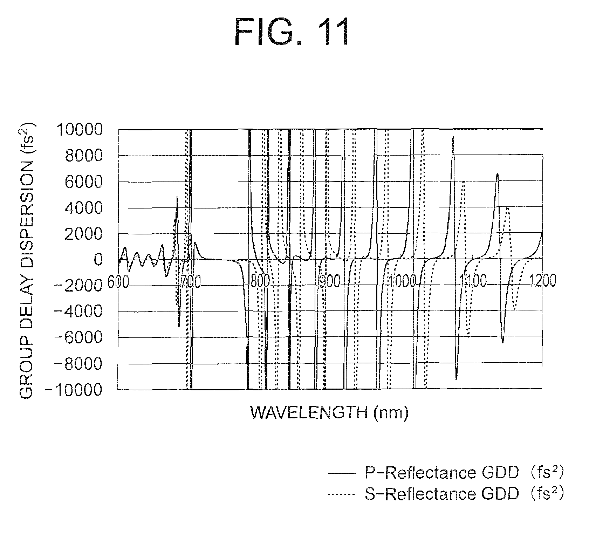

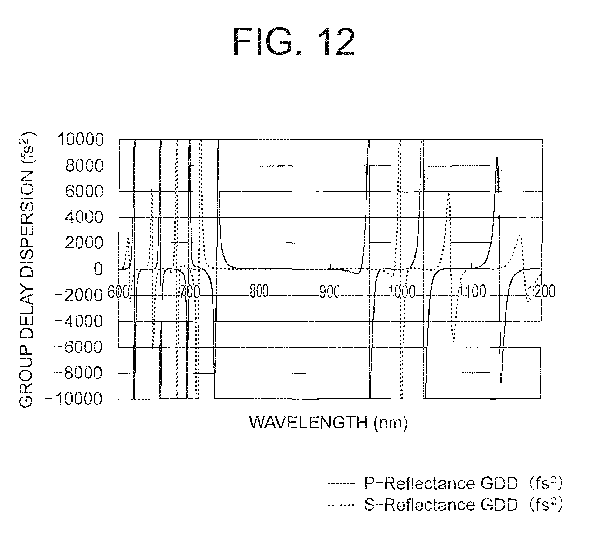

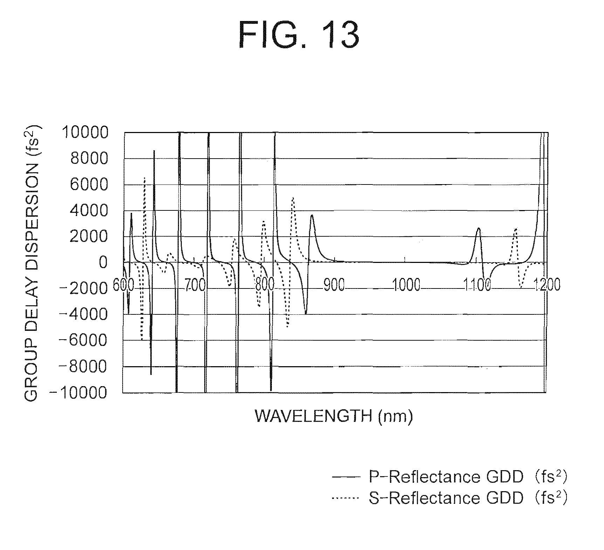

Fig. 8 is a diagram showing a change in a transmittance (%) with respect to a wavelength (unit nm) in the multilayer filter according to the second embodiment. Fig. 9 is a diagram showing a change in a group delay dispersion (fs²) with respect to the wavelength (unit nm) in the multilayer filter according to the second embodiment. Fig. 10 is a diagram showing a one-block film thickness with respect to the number of blocks stacked in the second stack and the third stack of the second embodiment. Fig. 11 is a diagram showing a change in the group delay dispersion (fs²) with respect to a wavelength (unit nm) in the first stack of the second embodiment. Fig. 12 is a diagram showing a change in the group delay dispersion (fs²) with respect to a wavelength (unit nm) in the second stack of the second embodiment. Fig. 13 is a diagram showing a change in the group delay dispersion (fs²) with respect to a wavelength (unit nm) in the third stack of the second embodiment.

As shown in Fig. 8, for light which is incident at 45° on the multilayer filter formed on the optical glass substrate, light in a wavelength range of 400 nm to 685 nm passes through, and light in a wavelength range of 710 nm to 1000 nm is reflected. Regarding the group delay dispersion, as shown in Fig. 9, in a range of 715 nm to 1000 nm which is a reflection band, the group delay dispersion is in a range of 0 ±8000 fs².

Regarding a film structure of the second stack and the third stack, as shown in Fig. 10, an optical film thickness for each block when two layers are let to be one block, increases gradually with an increase in the number of blocks from the substrate-side to the air-side. For the number of blocks shown in Fig. 10, side of zero indicates the substrate-side, and indicates that as the number increases, it comes closer to the air-side.

Furthermore, as it is evident from Fig. 11 to Fig. 13, the group delay dispersion has become smaller from the first stack (Fig. 11) which is nearest to the substrate up to the second stack (Fig. 12), and up to the third stack which is farthest from the substrate.

Moreover, the central wavelength for the first stack, the second stack, and the third stack differs mutually.

In the second embodiment, the method of IAD has been used. However, the formation of the thin film is not restricted to this method, and other methods such as the vacuum vapor deposition, the sputtering method, and the ion-beam sputtering method can be used.

### (Third embodiment)

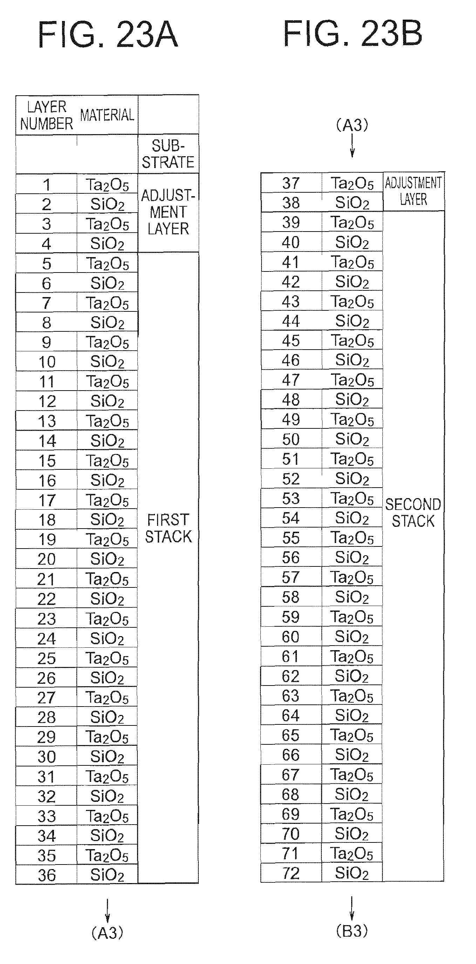

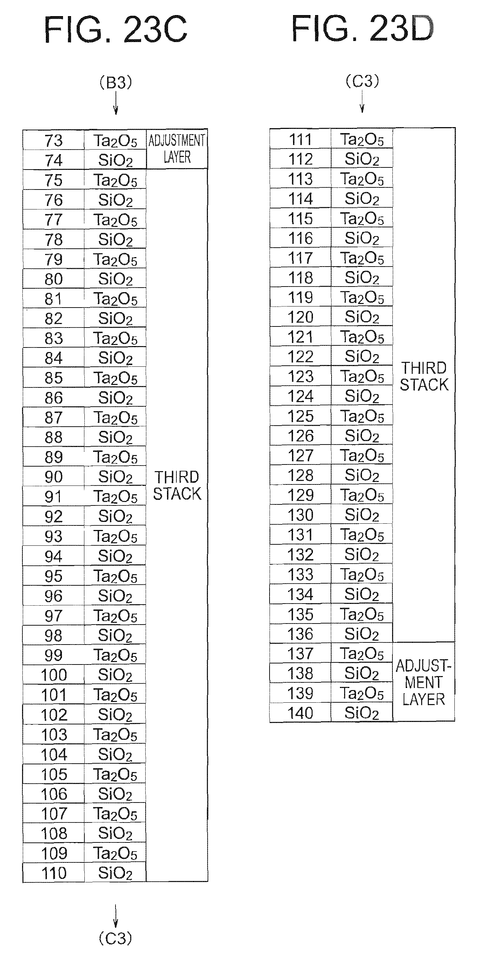

Numerical data for a multilayer film according to the third embodiment is shown below. Fig. 23A, Fig. 23B, Fig. 23C, and Fig. 23D are diagrams showing a layer structure of the multilayer filter according to the third embodiment of the present invention.

As shown in the numerical data, in the multilayer filter according to the third embodiment, thin films of a high refractive index material H (Ta₂O₅: refractive index 2.15) and a low refractive index material L (Si02: refractive index 1.48) are formed alternately on an optical glass substrate having a refractive index 1.52. More concretely, the multilayer filter is a multilayer filter made of 140 layers of thin films, in which, layers 1 to 14, layers 37 and 38, layers 73 and 74, and layers 137 to 140 from the substrate-side are let to be adjustment layers, layers 5 to 36 are let to be a first stack, layers 39 to 72 are let to be a second stack, and layers 75 to 136 are let to be a third stack. Consequently, the adjustment layers are formed between the substrate and the first stack, between the first stack and the second stack, between the second stack and the third stack, and on the third stack which is farthest from the substrate. Moreover, with two layers as one block, the second stack and the third stack are formed as a plurality of blocks, and an optical film thickness for each block increases gradually from the substrate-side toward the air-side.

### Third embodiment

| Layer number Substrate | Material | Film thickness (nm) |
|---|---|---|
| 1 | Ta₂O₅ | 0.0272 |
| 2 | SiO₂ | 0.0565 |
| 3 | Ta₂O₅ | 0.2591 |
| 4 | SiO₂ | 0.2736 |
| 5 | Ta₂O₅ | 0.2352 |
| 6 | SiO₂ | 0.2588 |
| 7 | Ta₂O₅ | 0.2221 |
| 8 | SiO₂ | 0.2548 |
| 9 | Ta₂O₅ | 0.2205 |
| 10 | SiO₂ | 0.2515 |
| 11 | Ta₂O₅ | 0.2190 |
| 12 | SiO₂ | 0.2520 |
| 13 | Ta₂O₅ | 0.2173 |
| 14 | SiO₂ | 0.2502 |
| 15 | Ta₂O₅ | 0.2184 |
| 16 | SiO₂ | 0.2503 |
| 17 | Ta₂O₅ | 0.2166 |
| 18 | SiO₂ | 0.2499 |
| 19 | Ta₂O₅ | 0.2170 |
| 20 | SiO₂ | 0.2494 |
| 21 | Ta₂O₅ | 0.2178 |
| 22 | SiO₂ | 0.2496 |
| 23 | Ta₂O₅ | 0.2164 |
| 24 | SiO₂ | 0.2512 |
| 25 | Ta₂O₅ | 0.2184 |
| 26 | SiO₂ | 0.2507 |
| 27 | Ta₂O₅ | 0.2176 |
| 28 | SiO₂ | 0.2498 |
| 29 | Ta₂O₅ | 0.2172 |
| 30 | SiO₂ | 0.2501 |
| 31 | Ta₂O₅ | 0.2178 |
| 32 | SiO₂ | 0.2511 |
| 33 | Ta₂O₅ | 0.2197 |
| 34 | SiO₂ | 0.2511 |
| 35 | Ta₂O₅ | 0.2198 |
| 36 | SiO₂ | 0.2543 |
| 37 | Ta₂O₅ | 0.2221 |
| 38 | SiO₂ | 0.2573 |
| 39 | Ta₂O₅ | 0.2265 |
| 40 | SiO₂ | 0.2603 |
| 41 | Ta₂O₅ | 0.2312 |
| 42 | SiO₂ | 0.2658 |
| 43 | Ta₂O₅ | 0.2334 |
| 44 | SiO₂ | 0.2673 |
| 45 | Ta₂O₅ | 0.2345 |
| 46 | SiO₂ | 0.2658 |
| 47 | Ta₂O₅ | 0.2320 |
| 48 | SiO₂ | 0.2625 |
| 49 | Ta₂O₅ | 0.2295 |
| 50 | SiO₂ | 0.2636 |
| 51 | Ta₂O₅ | 0.2323 |
| 52 | SiO₂ | 0.2677 |
| 53 | Ta₂O₅ | 0.2394 |
| 54 | SiO₂ | 0.2744 |
| 55 | Ta₂O₅ | 0.2436 |
| 56 | SiO₂ | 0.2792 |
| 57 | Ta₂O₅ | 0.2467 |
| 58 | SiO₂ | 0.2780 |
| 59 | Ta₂O₅ | 0.2467 |
| 60 | SiO₂ | 0.2810 |
| 61 | Ta₂O₅ | 0.2496 |
| 62 | SiO₂ | 0.2837 |
| 63 | Ta₂O₅ | 0.2509 |
| 64 | SiO₂ | 0.2846 |
| 65 | Ta₂O₅ | 0.2510 |
| 66 | SiO₂ | 0.2848 |
| 67 | Ta₂O₅ | 0.2549 |
| 68 | SiO₂ | 0.2890 |
| 69 | Ta₂O₅ | 0.2569 |
| 70 | SiO₂ | 0.2883 |
| 71 | Ta₂O₅ | 0.2551 |
| 72 | SiO₂ | 0.2868 |
| 73 | Ta₂O₅ | 0.2509 |
| 74 | SiO₂ | 0.2810 |
| 75 | Ta₂O₅ | 0.0402 |
| 76 | SiO₂ | 0.0187 |
| 77 | Ta₂O₅ | 0.2137 |
| 78 | SiO₂ | 0.0352 |
| 79 | Ta₂O₅ | 0.0347 |
| 80 | SiO₂ | 0.2769 |
| 81 | Ta₂O₅ | 0.0347 |
| 82 | SiO₂ | 0.0352 |
| 83 | Ta₂O₅ | 0.2229 |
| 84 | SiO₂ | 0.0352 |
| 85 | Ta₂O₅ | 0.0347 |
| 86 | SiO₂ | 0.2656 |
| 87 | Ta₂O₅ | 0.0347 |
| 88 | SiO₂ | 0.0352 |
| 89 | Ta₂O₅ | 0.2229 |
| 90 | SiO₂ | 0.0352 |
| 91 | Ta₂O₅ | 0.0347 |
| 92 | SiO₂ | 0.2656 |
| 93 | Ta₂O₅ | 0.0347 |
| 94 | SiO₂ | 0.0352 |
| 95 | Ta₂O₅ | 0.2229 |
| 96 | SiO₂ | 0.0352 |
| 97 | Ta₂O₅ | 0.0347 |
| 98 | SiO₂ | 0.2656 |
| 99 | Ta₂O₅ | 0.0347 |
| 100 | SiO₂ | 0.0352 |
| 101 | Ta₂O₅ | 0.2229 |
| 102 | SiO₂ | 0.0352 |
| 103 | Ta₂O₅ | 0.0347 |
| 104 | SiO₂ | 0.2656 |
| 105 | Ta₂O₅ | 0.0347 |
| 106 | SiO₂ | 0.0352 |
| 107 | Ta₂O₅ | 0.2310 |
| 108 | SiO₂ | 0.0352 |
| 109 | Ta₂O₅ | 0.0347 |
| 110 | SiO₂ | 0.2743 |
| 111 | Ta₂O₅ | 0.0347 |
| 112 | SiO₂ | 0.0352 |
| 113 | Ta₂O₅ | 0.2310 |
| 114 | SiO₂ | 0.0352 |
| 115 | Ta₂O₅ | 0.0347 |
| 116 | SiO₂ | 0.2743 |
| 117 | Ta₂O₅ | 0.0347 |
| 118 | SiO₂ | 0.0352 |
| 119 | Ta₂O₅ | 0.2310 |
| 120 | SiO₂ | 0.0352 |
| 121 | Ta₂O₅ | 0.0347 |
| 122 | SiO₂ | 0.2743 |
| 123 | Ta₂O₅ | 0.0347 |
| 124 | SiO₂ | 0.0352 |
| 125 | Ta₂O₅ | 0.2310 |
| 126 | SiO₂ | 0.0352 |
| 127 | Ta₂O₅ | 0.0347 |
| 128 | SiO₂ | 0.2743 |
| 129 | Ta₂O₅ | 0.0347 |
| 130 | SiO₂ | 0.0352 |
| 131 | Ta₂O₅ | 0.2310 |
| 132 | SiO₂ | 0.0352 |
| 133 | Ta₂O₅ | 0.0347 |
| 134 | SiO₂ | 0.2743 |
| 135 | Ta₂O₅ | 0.0347 |
| 136 | SiO₂ | 0.0352 |
| 137 | Ta₂O₅ | 0.2310 |
| 138 | SiO₂ | 0.0352 |
| 139 | Ta₂O₅ | 0.0347 |
| 140 | SiO₂ | 0.1396 |

| | | |
|---|---|---|
| Layer number | | |
| 1 to 4 | adjustment layer | |
| 5 to 36 | first stack | |
| 37 to 38 | adjustment layer | |
| 39 to 72 | second stack | |
| 73 to 74 | adjustment layer | |
| 75 to 136 | third stack | |
| 137 to 140 | adjustment layer | |

Formation of thin films, similarly as in the first embodiment and the second embodiment, was carried out by a method of forming thin films while assisting with an ion gun.

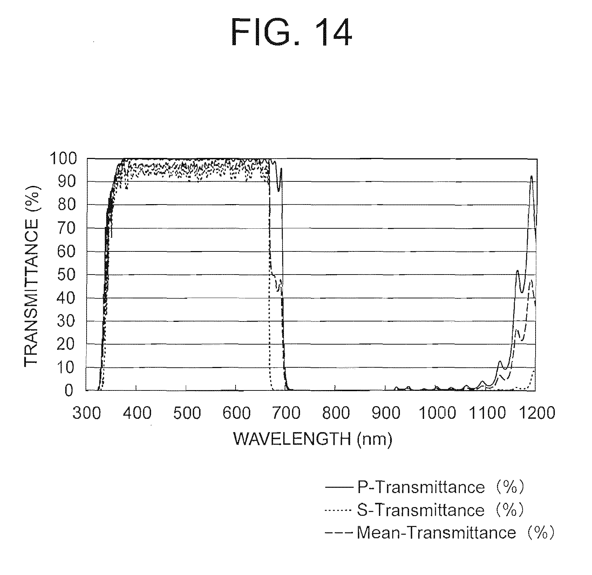

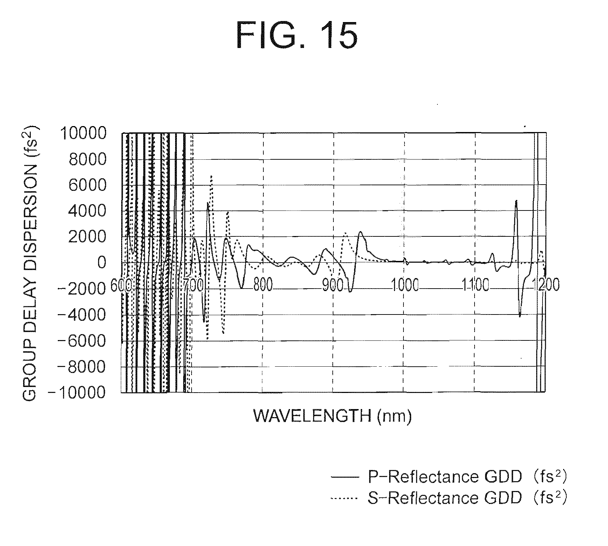

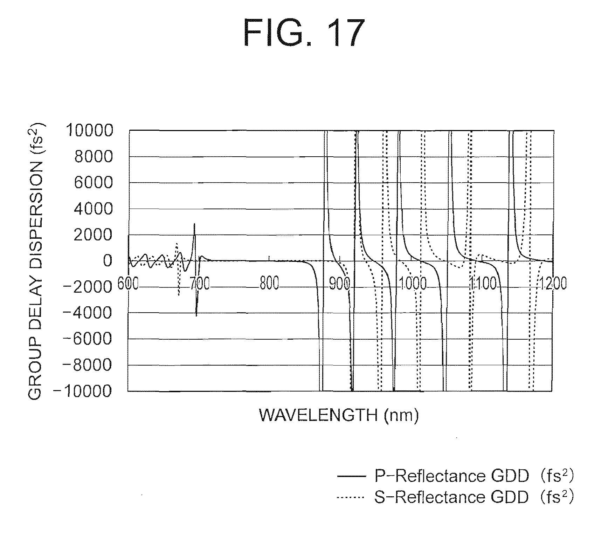

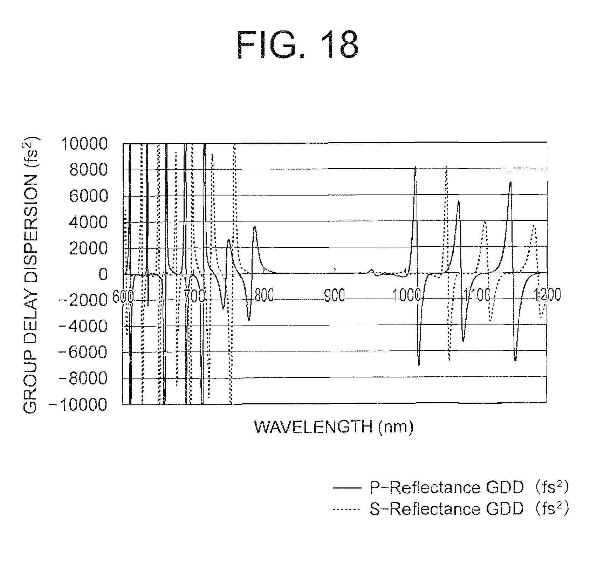

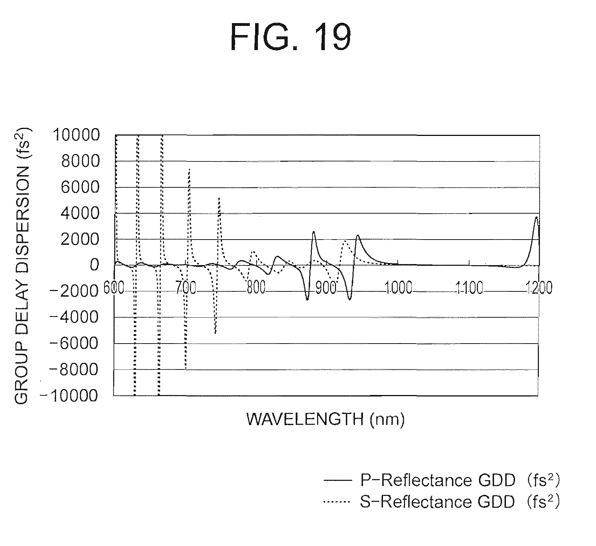

Fig. 14 is a diagram showing a change in a transmittance (%) with respect to a wavelength (unit nm) in the multilayer filter according to the third embodiment. Fig. 15 is a diagram showing a change in a group delay dispersion (fs²) with respect to the wavelength (unit nm) in the multilayer filter according to the third embodiment. Fig. 16 is a diagram showing a one-block thickness with respect to the number of blocks stacked in the second stack of the third embodiment. Fig. 17 is a diagram showing a group delay dispersion (fs²) with respect to a wavelength (unit nm) of the first stack in the third embodiment. Fig. 18 is a diagram showing a change in a group delay dispersion (fs²) with respect to a wavelength (unit nm) of the second stack of the third embodiment. Fig. 19 is a diagram showing a change in a group delay dispersion (fs²) with respect to a wavelength (unit nm) of the third stack in the third embodiment.

In Fig. 16, a dashed line shown by '+2.6%' is a straight line showing a range of +2.6% with respect to a regression line, and a solid line shown by '-2.6%' is a straight line showing a range of -2.6% with respect to the regression line.

An optical film thickness is a value of 'refractive index × physical film thickness' and a film thickness of each layer is described by 'optical film thickness / design wavelength' . Moreover, the design wavelength was let to be 900 nm. Moreover, fine adjustment of the optical film thickness of each layer has been carried out by automatic designing.

As shown in Fig. 14, for light which is incident at 45° on the multilayer filter formed on the optical glass substrate, light in a wavelength range of 350 nm to 665 nm passes through, and light in a wavelength range of 700 nm to 1100 nm is reflected. Regarding the group delay dispersion, as shown in Fig. 15, in the range of 700 nm to 1100 nm which is a reflection band, the group delay dispersion is in a range of 0 ±8000 fs².

Regarding a film structure of the second stack, as shown in Fig. 16, an optical film thickness for each block when two layers are let to be one block, increases gradually with an increase in the number of blocks from the substrate-side to the air-side. To be precise, the optical film thickness for each block is in a range of ±2.6% with respect to a regression line y = 0.038x + 0.4829.

Furthermore, as it is evident from Fig. 17 to Fig. 19, the group delay dispersion has become smaller from the first stack (Fig. 17) which is nearest to the substrate up to the second stack (Fig. 18), and up to the third stack (Fig. 19) which is farthest from the substrate.

Moreover, the central wavelength for the first stack, the second stack, and the third stack differs mutually.

Even in the third embodiment, the method of forming the thin film while assisting by an ion gun has been used. However, the formation of the thin film is not restricted to this method, and other methods such as the vacuum vapor deposition, the sputtering method, and the ion-beam sputtering method can be used.

As it has been described above, the multilayer filter according to the present invention is useful for a filter which is capable of dividing light without the pulse width being widened, and in which, it is necessary to widen a reflection band of visible light.

According to the multilayer filter according to the present invention, it is possible to divide light without the pulse width being widened, and moreover, to widen the reflection band of the visible light.

## Claims

1. A multilayer filter comprising:
a stack which is a dielectric multilayer film in which, layers of at least two types, each layer having a different refractive index, are stacked alternately; and
a substrate on which, at least two stacks are stacked,
wherein a group delay dispersion of the stack decreases gradually as far from the substrate.

2. The multilayer filter according to claim 1, wherein the multilayer filter has an adjustment layer at any one or more positions from positions, between the two stacks which are stacked, between the substrate and the stack, and on the stack which is farthest from the substrate.

3. The multilayer filter according to one of claims 1 and 2, wherein central wavelengths of the plurality of stacks which are stacked on the substrate differ mutually.

4. The multilayer filter according to one of claims 1 to 3, wherein at least one of the plurality of stacks is made of a plurality of blocks, each block having the same number of layers, and an optical film thickness of the plurality of blocks increases gradually as far from the substrate.

5. The multilayer filter according to claim 4, wherein a change in the optical film thickness of the plurality of blocks in the stack is in a range of ±2.6% from a regression line.

6. The multilayer filter according to one of claims 1 to 5, wherein a transmittance is not more than 5% and the group delay dispersion is in a range of ±8000 fs².
